# EUROPEAN PATENT APPLICATION

(11) **EP 4 382 449 A2**
(43) Date of publication of application: **12.06.2024**
(21) Application number: 23214116.8
(22) Date of filing: 04.12.2023
(51) Int. Cl.: B65D 33/25, B65D 65/46

(54) **MOISTURE PROTECTED ENCLOSURE COMPONENTS**

(30) Priority: 07.12.2022 US 202263430789 P; 01.12.2023 US 202318526241
(71) Applicant: Illinois Tool Works Inc., Glenview IL 60025 (US)
(72) Inventor: SEPTIEN ROJAS, Jose Manuel, Glenview 60025 (US); JOHNSON, Marion, Glenview 60025 (US); PLOURDE, Eric, Glenview 60025 (US); PIEDRA, Juan, Glenview 60025 (US)
(74) Representative: HGF

(57) **Abstract**

A zipper assembly (104) is provided that can include an elongated base (200) that may be coupled with a panel (102) of an enclosure (100), and interlocking elements (202, 204) protruding from the base that can alternate between a mated state while coupled with other interlocking elements of another base and an unmated state while separated from the other interlocking elements of the other base to alternately close and open the enclosure. One or more of the base or the interlocking elements may include a core (208) and at least a partial outer layer (206). The core can be formed from a core material having a higher water solubility than an outer material from which the outer layer is formed.

## Description

### CROSS-REFERENCE TO RELATED APPLICATIONS

This application claims priority to U.S. Provisional Application No. 63/430,789 (filed 07-December-2022), the entire disclosure of which is incorporated herein by reference.

### BACKGROUND

### Technical Field.

The subject matter described herein relates to enclosures such as resealable bags or pouches formed from different types of materials, where one of the materials has a higher water solubility than another material, and at least one of the materials protects the solubility material from moisture.

### Discussion of Art.

Many enclosures include reclosable assemblies to allow users to repeatedly open and close the enclosures. For example, plastic bags may have zipper assemblies having opposing profiles formed from intermeshing or interlocking elements. These elements may be bodies having complimentary or matching shapes to allow the profiles to interlock with each other to close the enclosure. A user may pull the profiles away from each other with sufficient force to separate the elements to open the enclosure. The zipper assemblies can be coupled with the enclosures by attaching opposite sides of the profiles with panels of the enclosures.

There is a growing trend and desire to use more repulpable or other recyclable materials to reduce overall waste. To this end, some reclosable enclosures are formed from repulpable materials. But these materials may have greater water solubility and, as a result, may break down when exposed to ambient moisture or other moisture. This can be a significant impediment to more wide scale adoption or usage of the materials in enclosures.

### BRIEF DESCRIPTION

In one example, a zipper assembly is provided that can include an elongated base that may be coupled with a panel of an enclosure, and interlocking elements protruding from the base that can alternate between a mated state while coupled with other interlocking elements of another base and an unmated state while separated from the other interlocking elements of the other base to alternately close and open the enclosure. One or more of the base or the interlocking elements may include a core and at least a partial outer layer. The core can be formed from a core material having a higher water solubility than an outer material from which the outer layer is formed.

In another example, a zipper assembly is provided that may include a base that can be coupled with a panel of an enclosure, and interlocking elements protruding from the base that may alternate between a mated state and an unmated state to alternately close and open the enclosure. One or more of the base or the interlocking elements may be formed from include a resin having one or more of a salt or cellulose dispersed throughout the resin.

In another example, a method for forming a zipper assembly may include extruding a core material to form a zipper assembly having a base (that can be coupled with a panel of an enclosure) and interlocking elements (protruding from the base that can alternate between a mated state and an unmated state to alternately close and open the enclosure) and forming an outer layer that at least partially covers the core material of the zipper assembly. The core material may have a higher water solubility than an outer material from which the outer layer is formed.

### BRIEF DESCRIPTION OF THE DRAWINGS

The inventive subject matter may be understood from reading the following description of non-limiting embodiments, with reference to the attached drawings, wherein below:
Figure 1 illustrates one example of a recloseable or resealable enclosure;
Figure 2 illustrates a cross-sectional view of one example of the zipper assembly;
Figure 3 illustrates another example of the zipper assembly shown in Figures 1 and 2, but with an outer layer shown in Figure 2 only covering exposed portions of a core shown in Figure 1;
Figure 4 illustrates another example of the zipper assembly shown in Figures 1 through 3, but with the outer layer only covering exposed portions of the core and an additional layer covering a back side of the core;
Figure 5 illustrates another example of the zipper assembly shown in Figures 1 through 4, but with the outer layer formed as elongated strips extending only on part of the core;
Figure 6 illustrates another example of the zipper assembly shown in Figures 1 through 5, but with the outer layer only formed on part of the core;
Figure 7 illustrates another example of the zipper assembly shown in Figures 1 through 6;
Figure 8 illustrates one example of a manufacturing system that may be used to create one or more of the zipper assemblies;
Figure 9 illustrates another example of a manufacturing system that may be used to create one or more of the zipper assemblies described herein; and
Figure 10 illustrates a flowchart of one example of a method for forming a moisture-protected enclosure component.

### DETAILED DESCRIPTION

One or more embodiments of the inventive subject matter described herein provide reclosable enclosures having one or more components formed from materials having higher water solubility than other materials. These higher water solubility materials may be recyclable, or repulpable materials, and may be more prone to chemically breaking down into constituent elements or compounds than materials currently used to form the enclosures. For example, the higher solubility materials may include paper or paper-based materials or bodies. The inventive enclosures described herein may include lower solubility materials positioned in or on the enclosures to protect the higher solubility materials from exposure to moisture. This can extend the useful life of the enclosures.

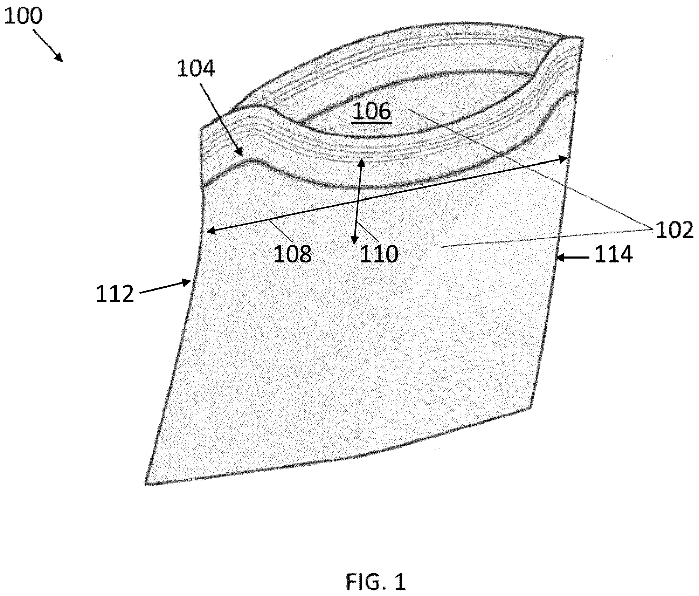

Figure 1 illustrates one example of a recloseable or resealable enclosure 100. The enclosure 100 may be a flexible enclosure that includes one or more films or panels 102 formed in the shape of an open-ended bag. A zipper assembly 104 may be coupled with the films 102 at or near an opening 106 of the enclosure 100. The zipper assembly 104 may attach to itself to allow a consumer to repeatedly open and close the enclosure 100. The films 102 and/or zipper assembly 104 may be formed from one or more polymers and may include non-common materials (e.g., repulpable materials) as described herein. These materials may be formed or derived from recyclable paper or other biodegradable materials.

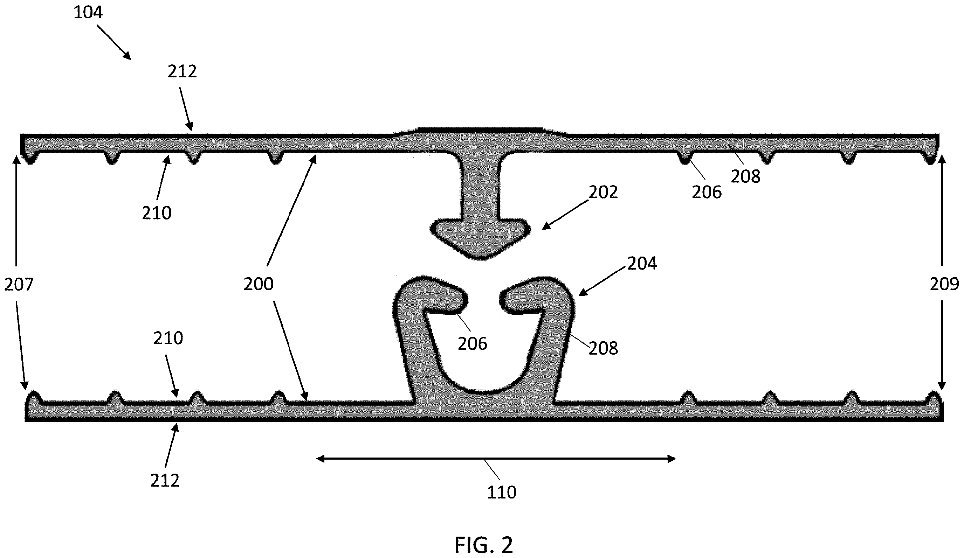

With continued reference to the enclosure 100 shown in Figure 1, Figure 2 illustrates a cross-sectional view of one example of the zipper assembly 104 shown in Figure 1. The zipper assembly 104 includes an elongated base 200 that is coupled with or can be coupled with (e.g., via heat sealing, adhesives, or the like) the panel 102 of the enclosure 100. The zipper assembly 104 also includes interlocking elements 202, 204 protruding from the base 200. The base 200 has a facing side 210 and an opposite panel side 212. The facing side 210 of one base 200 with the interlocking element 202 faces or opposes the other base 200 having the interlocking element 204. The panel sides 212 of the bases 200 may face and be coupled with the panels 102 to affix the zipper assembly 104 to the panels 102.

The interlocking elements 202 may be elongated male interlocking bodies that are received into wider female interlocking elements 204 to secure the interlocking elements 202, 204 together. The interlocking elements 202, 204 may be pulled apart from each other to access the interior of the enclosure 100 and may be pressed together to close and prevent access to the interior of the enclosure 100. For example, the interlocking elements 202, 204 may alternate between a mated state while coupled with other interlocking elements 202, 204 of another base 200 and an unmated state while separated from the other interlocking elements 202, 204 of the other base 200 to alternately close and open the enclosure 100.

The base 200 may extend in a lateral direction 108 and may be elongated in a transverse panel direction 110. The lateral direction 108 may extend from one edge, seam, or side 112 of the enclosure 100 to an opposite edge, seam, or side 114 of the enclosure 100. The panel direction 110 may be perpendicular to the lateral direction 108. The base 200 may extend in the transverse direction 110 from a first or top end 207 of the base 200 to an opposite second or bottom end 209 of the base 200. In the illustrated example, the ends 207, 209 of the base 200 may extend well beyond the interlocking elements 202, 204. Alternatively, the ends 207, 209 may not extend beyond the interlocking elements 202, 204.

The base 200 and/or the interlocking elements 202, 204 may be recyclable with paper and biodegradable to pass repulpabability tests in the packaging industry, while still resisting water vapor or liquids present in the final enclosure 100 of which the zipper assembly 104 is part. The interlocking elements 202, 204 and/or base 200 may include one or more outer coatings or outer layers 206 that surround and/or enclose a core 208. The outer coatings or layers 206 may be formed from one or more materials having lower water solubility (or that are not water soluble) than the material(s) used to form the core 208. For example, the core 208 may be formed from or include a resin that includes polyvinyl alcohol, a cellulose material (such as hydroxyethyl cellulose), talc, calcium carbonate filler, or the like. The outer layer 206 may include or be formed from a biodegradable material, a polyolefin, a wax, an oil, an acrylic material, low density polyethylene, or the like. The outer layer 206 may include a salt or a cellulose material, such as hydroxyethyl cellulose. These materials of the outer layer 206 may be less soluble in water than the material(s) of the core 208. As a result, exposure of the zipper assembly 104 to moisture may not reach the core 208 as the outer layer 206 may operate as a barrier to passage of the moisture. This can prevent the material of the core 208 from breaking down upon exposure of the material to the moisture.

The outer layer 206 may be applied to the core 208 as a co-extruded material (e.g., the outer layer 206 may be co-extruded at the same time as the core 208) or may be formed as a post-extrusion coating (e.g., the core 208 may be extruded and then the outer layer 206 may be formed or coated onto the core 208). The outer layer 206 may operate as a bonding agent or sealant to attach the zipper assembly 104 to the panels 102. For example, the panels 102 may not be compatible with the material of the core 208 in that the core 208 may not be able to be bonded or adhered to the panels 102. Instead, the outer layer 206 may be bonded or adhered to the panels 102.

In the illustrated example, the outer layer 206 completely surrounds, covers, encapsulates, encloses, etc. the entirety of the core 208. For example, no part of the core 208 may be outside of the outer layer 206 or accessible through a gap in the outer layer 206. This can help protect the core 208 from moisture.

As described above, the outer layer 206 may be co-extruded with the core 208 or may be added to the core 208 after the core 208 is extruded or otherwise formed. Optionally, the outer layer 206 may be formed as a coating on the core 208 by moving or running the core 208 through a liquid bath. This liquid bath can be a liquid in a tank, such as an open top tub, having a solvent such as water and a solute. The solute may be in the solvent at a concentration that saturates the solvent with the solute (e.g., not all of the solutes may be dissolved within the solvent). As one example, the solute may be a salt, or a cellulose described herein. This can cause the outer layer 206 to be formed from a salt or the cellulose, which can be less water soluble than the core 208.

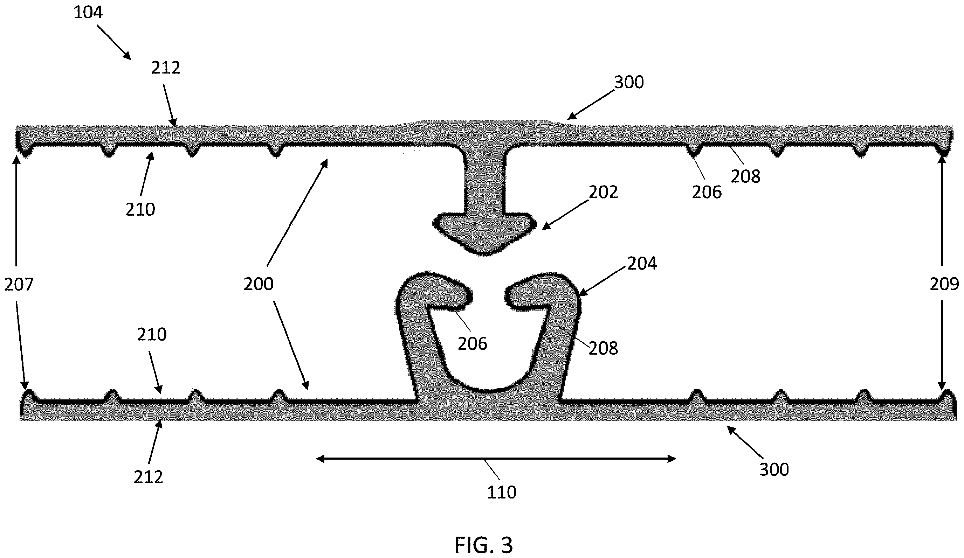

Figure 3 illustrates another example of the zipper assembly 104 shown in Figures 1 and 2, but with the outer layer 206 only covering exposed portions of the core 208. For example, a back side 300 of the core 208 may be the portion of the core 208 that engages the panels 102. This back side 300 of the core 208 may be adhered or sealed to the panels 102 such that the panels 102 can protect the core 208 from exposure to moisture (with the panels 102 formed from materials having higher water solubility than the core 208). The remaining surfaces or sides of the core 208 may be covered by the outer layer 206 such that the lower solubility core 208 is completely surrounded, encompassed, encapsulated, enclosed, etc. by a combination of the outer layer 206 and the panels 102.

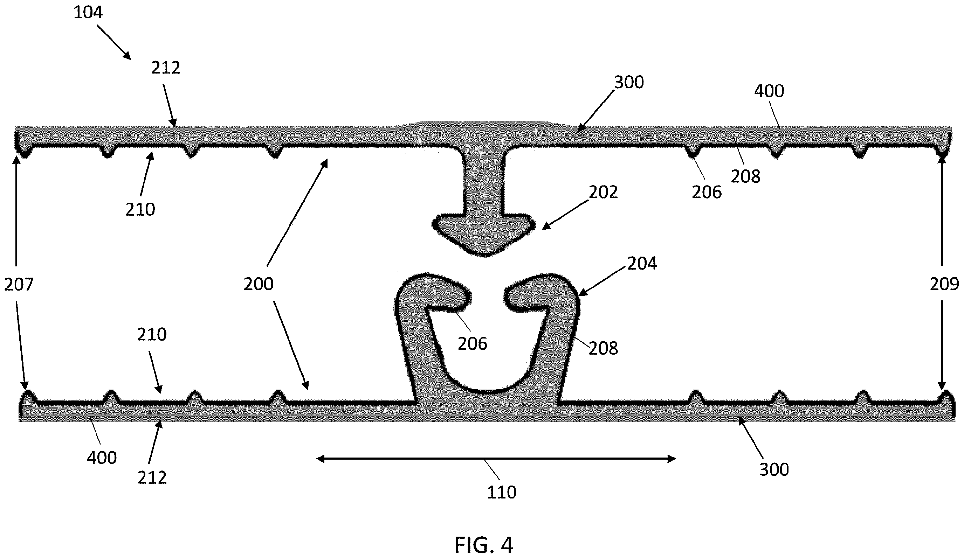

Figure 4 illustrates another example of the zipper assembly 104 shown in Figures 1 through 3, but with the outer layer 206 only covering exposed portions of the core 208 and an additional layer 400 covering the back side 300 of the core 208. The back side 300 of the core 208 may not be able to be adhered or sealed to the panels 102 due to incompatibility between the materials of the core 208 and the panels 102. The additional layer 400 may be applied to the back side 300 (e.g., co-extruded with the core 208 or added after formation of the core 208). The additional layer 400 may be formed from a material that is compatible with the panels 102, such as by forming the layer 400 from the same material as the panels 102. Optionally, the additional layer 400 may adhere better to the panels 102 than the core 208 and/or the material from which the outer layer 206 is formed. For example, the adhesion or bonding strength between the additional layer 400 and the panels 102 may be stronger than between the panels 102 and the core 208 or the outer layer 206. This can help seal the zipper assembly 104 to the panels 102 while protecting the core 208 from exposure to moisture.

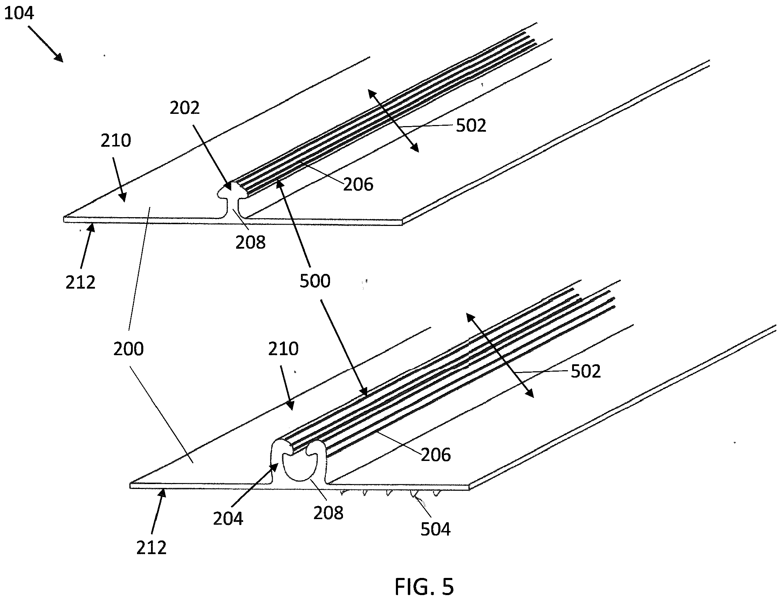

Figure 5 illustrates another example of the zipper assembly 104 shown in Figures 1 through 4, but with the outer layer 206 formed as elongated strips extending only on part of the core 208. The zipper assembly 104 is shown in a perspective view in Figure 5 with the base 200 and interlocking element 202 facing away from the interlocking element 204. Stated differently, the base 200 and interlocking element 202 on the top half of Figure 5 would be flipped over to face the interlocking element 204 and other base to allow the interlocking elements 202, 204 to mate with each other.

As shown in Figure 5, the outer layer 206 is formed as elongated strips 500 of the lower water solubility material. These strips 500 may be elongated along elongation directions that are parallel to the transverse direction 108. Alternatively, the strips 500 may be elongated along another direction, such as the panel direction 110 or a direction between the transverse direction 108 and the panel direction 110. The strips 500 may be parallel to each other, or two or more of the strips 500 may not be parallel to each other (depending on locations where moisture is more or less likely to enter). The strips 500 can be spaced apart from each other along separation directions 502 that are transverse to the elongation directions. This can expose the material of the core 208. For example, the material of the core 208 may be exposed and may not be covered by the strips 500 in locations between the strips 500. The amount of the core 208 that is exposed may be relatively small, minor, or less than predominant when compared with the amount of the core 208 that is covered by the elongated strips 500 to prevent dissolving of the core 208 when exposed to moisture. Conversely, the amount of the core 208 that is exposed may be relatively large or predominant when compared with the amount of the core 208 that is covered by the elongated strips 500 to facilitate dissolving of the core 208 during the recycling or repulping process.

The core 208 can be formed from a water soluble material such as polyvinyl alcohol, and the strips 500 can be formed by extruding the non-water soluble material (or the material that is less water soluble than the core 208) onto the core 208. In one example, the strips 500 may only be placed or formed on the areas of the core 208 forming the interlocking elements 202, 204, such as only the areas where the interlocking elements 202, 204 engage, mate, or touch each other. The strips 500 can operate as stand-offs to keep the water soluble surfaces of the core 208 from fusing together. For example, without the outer layer 206 or the strips 500, the material forming the core 208 may fuse together when the interlocking elements 202, 204 mate with each other (and become exposed to moisture). The strips 500 can prevent the core 208 in the interlocking elements 202, 204 from engaging, touching, mating, or the like, and therefore prevent the core 208 in the interlocking elements 202, 204 from fusing together while the interlocking elements 202, 204 mate with each other. The remainder of the core 208 can be left uncovered by the strips 500. Alternatively, the entirety of the core 208 that faces the other core 208 in the zipper assembly 104 may have the strips 500.

The panel side 212 of one or both bases 200 may include sealant ribs 504 protruding from the panel side 212. The sealant ribs 504 may be formed from the less water soluble material of the outer layer 206 or strips 500, or from another material having lower water solubility than the material of the core 208. The material(s) forming the sealant ribs 504 may form stronger bonds with the panel(s) 102 (when compared with one or more other materials, such as the materials forming the core 208, outer layer 206, and/or strips 500).

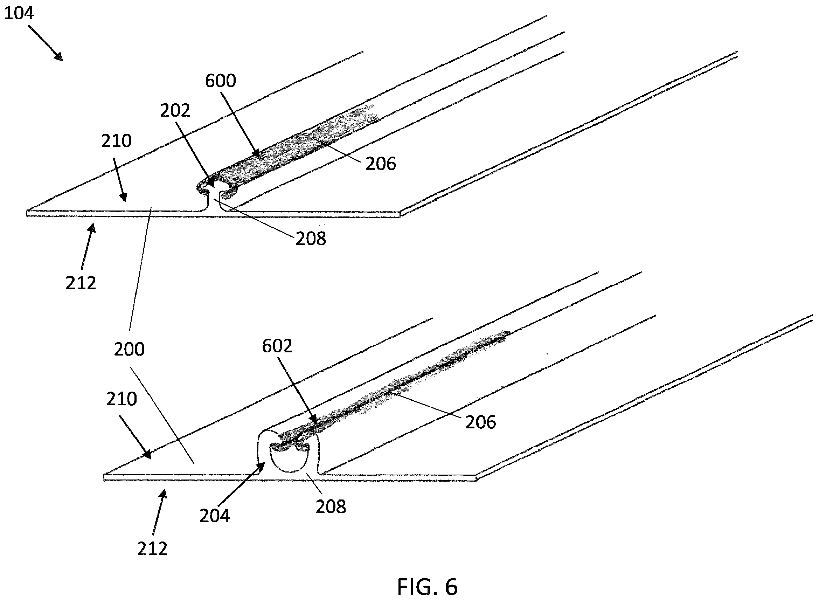

Figure 6 illustrates another example of the zipper assembly 104 shown in Figures 1 through 5, but with the outer layer 206 only formed on part of the core 208. The outer layer 206 may be formed on areas 600, 602 of the core 208 that form the surfaces of the interlocking elements 202, 204 that would engage, mate, or touch each other if the interlocking elements 202, 204 were mated without the outer layer 206. For example, while a previously described example discloses including the strips 500 only on these engaging or contacting areas of the interlocking elements 202, 204, this other example provides the outer layer 206 on the entirety of the surfaces or surface areas 600, 602 that would or will engage, touch, mate, or the like, each other while the interlocking elements 202, 204 are engaged with each other, while leaving the remainder of the interlocking elements 202, 204 and/or the core 208 uncovered by the outer layer 206. This can reduce the amount of less water soluble material that is used in the enclosure 100, which can be desirable to meet various recycling or repulpability metrics or requirements. When the enclosure 100 is ready to be recycled, the outer layer 206 (in this and/or other examples) can be cut, slit, or the like, to expose the more water soluble core 208.

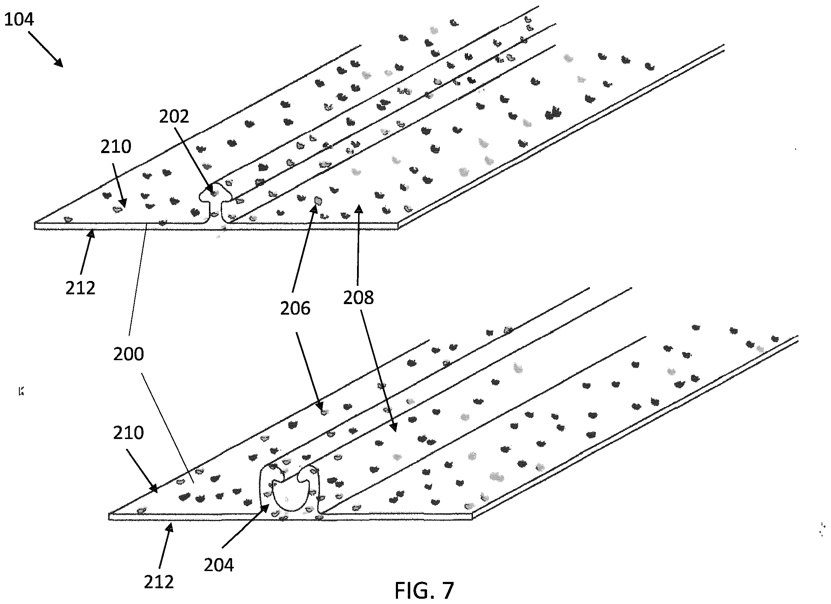

Figure 7 illustrates another example of the zipper assembly 104 shown in Figures 1 through 6. In this example, instead of forming or placing the material forming the outer layer 206 on all or part of the exterior of the core 208, the core 208 itself may include the material forming the outer layer 206. The higher water solubility material forming the core 208 may form the resin or matrix of the body of the zipper assembly 104, while the lower water solubility material forming the outer layer 206 in the other examples may be dispersed throughout this resin or matrix as filler material. For example, the lower water soluble material can be mixed into the higher water soluble material and then extruded or otherwise formed to create the zipper assembly 104. The higher water solubility resin may include material such as polyvinyl alcohol (PVOH, PVA), another higher water solubility extrudable resin, or another one of the higher water solubility materials described herein. The filler material that is less soluble in water may include cellulose material or other fillers, such as talc or calcium carbonate. This can provide increased resistance of the zipper assembly 104 to completely dissolving when exposed to moisture, but also can allow for the zipper assembly 104 to include more of the repulpable material described herein.

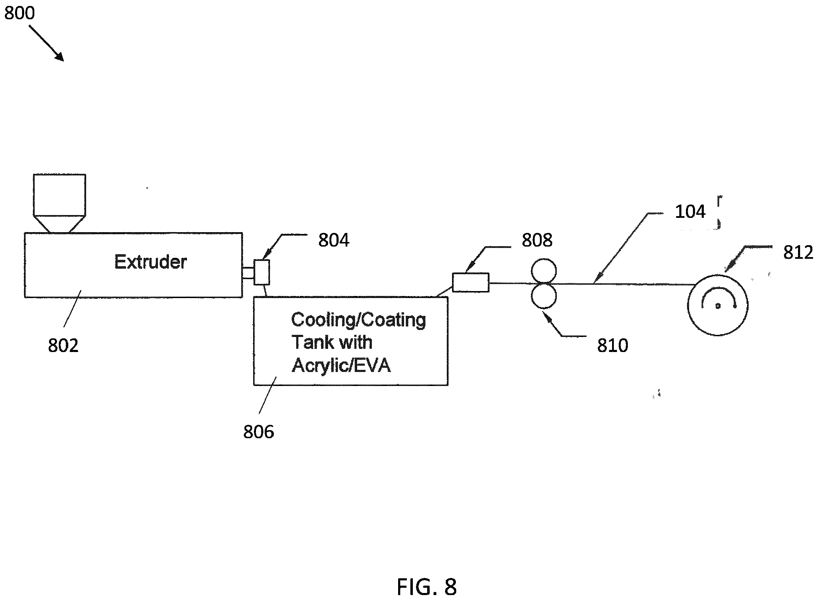

Figure 8 illustrates one example of a manufacturing system 800 that may be used to create one or more of the zipper assemblies 104 described herein. The zipper assemblies 104 may be manufactured by co-extruding both the core 208 and the outer layer 206 concurrently or at the same time, extruding the core 208 first and then adding the outer layer 206 (e.g., such as by extruding the outer layer 206, spraying the outer layer 206, or otherwise adhering the outer layer 206 to the core 208 in a post-extrusion process), or co-extruding the core 208 and the outer layer 206 concurrently or at the same time and adding one or more additional components or sections of the outer layer 206 using the post-extrusion process.

As another option, the zipper assemblies 104 may be created using the manufacturing system 800, which coats the higher water solubility material of the core 208 with the lower water solubility material of the outer layer 206. The manufacturing system 800 includes an extruder 802 having one or more dies 804 through which the material used to form the core 208 is pushed. The extruder 802 can melt and push the material of the core 208 through the one or more dies 804, which can have outlets in the shape of the base 200 and the interlocking elements 202, 204 to form the zipper assembly 104. The zipper assembly 104 may exit from the die(s) 804 without any material of the outer layer 206 formed on the material of the core 208 or without any part of the outer layer 206 formed on or in the core 208.

The manufacturing system 800 may include a coating tank 806 that is or includes a container holding a liquid bath or body of liquid into which the core 208 in the shape of the zipper assembly 104 is directed. The liquid bath in the coating tank 806 may include material that can coat the core 208 with the material forming the outer layer 206. For example, the liquid bath may include an aqueous based acrylic material, such as an aqueous based acrylic resin, an acrylic emulsion (e.g., RHOPLEX AC-264) a vinyl acrylic emulsion, or the like. This material can form the outer layer 206 due to the aqueous based acrylic becoming insoluble or less soluble in water once the acrylic has dried or cured onto the outer layer 206.

The coated zipper assembly 104 may then exit the liquid bath in the coating tank 806 and be dried or cured by a dryer device or curing device 808. The device 808 can include fans or blowers that move air across or over the zipper assembly 104, can include heat lamps, ultraviolet light (UV) lamps, or the like, that dry, heat, and/or cure the outer layer 206 on the core 208 of the zipper assembly 104. This can remove excess portions of the outer layer 206 and leave only a thin skin coat of the outer layer 206 (e.g., the acrylic resin) on the core 208. The outer layer 206 may be further dried using heat, for example provided by infrared lamps. A roller device 810 may include rotating nips or nip heads that pull on the zipper assembly 104 to pull the zipper assembly 104 through the liquid bath and the dryer or curing device 808 before the zipper assembly 104 is wound or rolled up onto a spool 812.

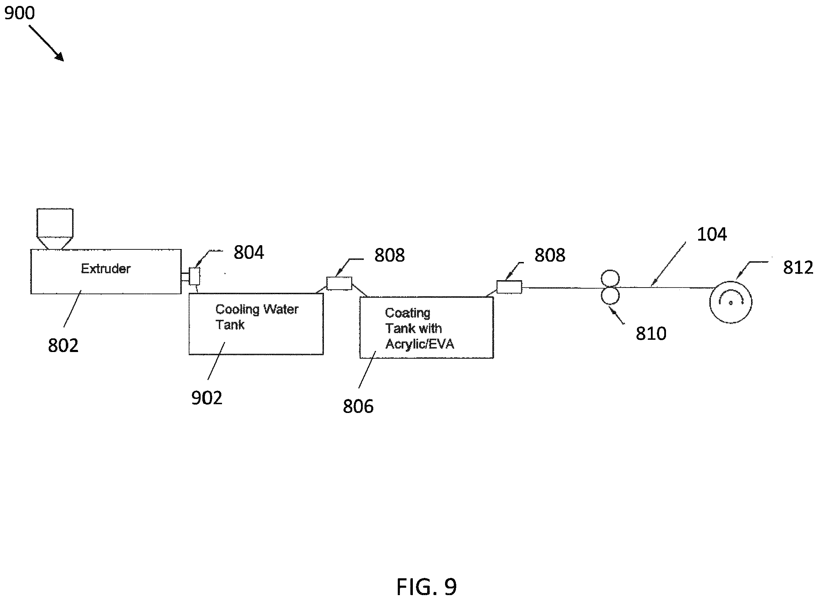

Figure 9 illustrates another example of a manufacturing system 900 that may be used to create one or more of the zipper assemblies 104 described herein. As described herein, one method for manufacturing the zipper assemblies 104 may include co-extruding both the core 208 and the outer layer 206 concurrently or at the same time or extruding the core 208 first and then adding the outer layer 206 (e.g., such as by extruding the outer layer 206, spraying the outer layer 206, or otherwise adhering the outer layer 206 to the core 208).

As another option, the zipper assemblies 104 may be created using the manufacturing system 900, which coats the higher water solubility material of the core 208 with the lower water solubility material of the outer layer 206. The manufacturing system 900 may be similar to the manufacturing system 800 shown in Figure 8 with the extruder 802, die(s) 804, the coating tank 806, drier or curing device 808, the roller device 810, and the spool 812. Additionally, the manufacturing system 900 may include an additional cooling tank 902 between the die(s) 804 and the coating tank 806. The cooling tank 902 can include a coolant, such as water, glycol, or the like, through which the core 208 in the shape of the zipper assembly 104 passes to be cooled before passing into and through the coating tank 806. Optionally, the zipper assembly 104 may pass through the coating tank 806 prior to passing through the cooling tank 902. Cooling the zipper assembly 104 may help speed up the manufacturing process and/or prevent deformation of the zipper assembly 104 as the zipper assembly 104 is pulled through the various stations or devices of the manufacturing system 900.

Coating the zipper assembly with the acrylic material may allow for paper based enclosures 100 to have acrylic-type coatings for use as barriers to water, oils, and the like. The acrylic coatings also may be used as heat sealable materials for forming the enclosure 100. An acrylic coating on the zipper assembly 104 may allow the zipper assembly 104 to be heat sealed to the acrylic coating on the paper substrate or panel of the enclosure 100.

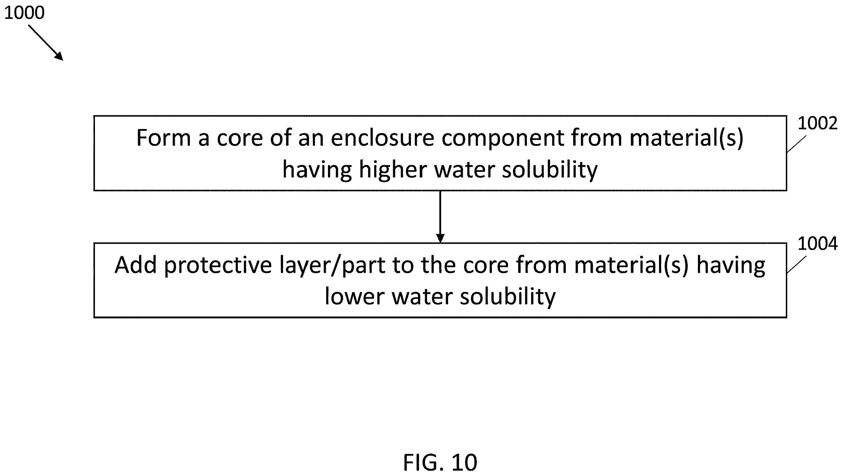

Figure 10 illustrates a flowchart of one example of a method 1000 for forming a moisture-protected enclosure component. The method 1000 may be used to protect one or more parts of the enclosure 100 shown in Figure 1 from moisture. In one example, the method 1000 may be used to protect the zipper assembly 104 shown in Figure 1, but optionally may be used to protect one or more of the panels of the enclosure 100. At 1002, the component (e.g., the zipper assembly 104 and/or panels) is formed. This can occur by extruding the component, molding the component, or the like. The component may be formed with the core that has a higher solubility in water than a protective layer or part of the component.

At 1004, the protective layer or part is added to the core of the component. This protective layer or part may be the outer layer that is added and that has a lower solubility in water than the core. As described herein, the protective layer or part may be formed as an all-encompassing layer, a partially encompassing layer, elongated strips, etc., or may be mixed into the core. The component having the core and the protective layer or part may then be added to one or more other parts (e.g., panels, zipper assemblies, etc.) to form the enclosure 100.

While several examples of zipper assemblies and enclosures are described herein, the examples are not mutually exclusive of each other unless expressly stated or claimed. For example, in at least one embodiment, two or more features or components of the zipper assemblies and/or enclosures described herein may be combined. A zipper assembly can include a core formed from a core material having a higher water solubility than an outer material from which the outer layer is formed, opposite ends of a base can be at, beneath, and/or outside of the interlocking elements, the core may include one or more, or all, of the materials described herein, the outer layer may or may not include the additional materials described herein, the outer layer may or may not be formed from strips, the outer layer may be formed from a single layer or multiple layers (of the same or different materials), sealant ribs may be provided, and/or the like. Illustration of one feature of a zipper assembly or enclosure in one Figure but not in another Figure is not to be construed as a disavowal or statement that the features of the zipper assemblies and/or enclosures cannot be combined with each other (unless otherwise stated).

In one example, a zipper assembly is provided that can include an elongated base that may be coupled with a panel of an enclosure, and interlocking elements protruding from the base that can alternate between a mated state while coupled with other interlocking elements of another base and an unmated state while separated from the other interlocking elements of the other base to alternately close and open the enclosure. One or more of the base or the interlocking elements may include a core and at least a partial outer layer. The core can be formed from a core material having a higher water solubility than an outer material from which the outer layer is formed.

The base may be elongated in a lateral direction and a transverse panel direction. The base can extend from a first end to an opposite second end in the panel direction. The first end and the second end may be disposed at or beneath the other interlocking elements of the other base while the interlocking elements of the base are mated with the other interlocking elements of the other base. Optionally, the first end and the second end may be disposed outside of the other interlocking elements of the other base while the interlocking elements of the base are mated with the other interlocking elements of the other base.

The core material may be a resin that includes polyvinyl alcohol, a cellulose material (e.g., hydroxyethyl cellulose), talc, calcium carbonate filler, etc. The outer material may be formed from a biodegradable material, a polyolefin, a wax, an oil, an acrylic material, or low density polyethylene. The outer material may include a salt or a cellulose (e.g., hydroxyethyl cellulose).

The outer layer may partially cover the core. The outer layer may be formed as elongated strips of the outer material that are spaced apart from each other along directions that are transverse to elongation directions of the strips of the outer material, with the core exposed in locations between the strips of the outer material.

The outer layer may only cover portions of the interlocking elements that mate with each other while leaving the core material in a remainder of the interlocking elements exposed. The base may include a facing side from which the interlocking elements protrude and an opposite panel side that can be sealed to the panel of the enclosure. The outer layer may cover the interlocking elements and the facing side of the base but leave the core on the panel side of the base exposed.

The base may include a facing side from which the interlocking elements protrude and an opposite panel side that is configured to be sealed to the panel of the enclosure. The outer layer may be a first outer layer, and the outer material may be a first outer material. The zipper assembly may also include a second outer layer that can be formed from a second outer material having lower water solubility than the core material. The first outer layer may cover the interlocking elements and the facing side of the base, and the second outer layer may cover the panel side of the base.

The second outer material may have greater adhesion to the panel of the enclosure than the first outer material. The outer layer may completely cover and enclose the core. The interlocking elements may protrude from a facing side of the base with an opposite panel side of the base that can be sealed to the panel of the enclosure. The panel side of the base may include one or more sealant ribs protruding from the panel side. The one or more sealant ribs may be formed from the outer material or another material having lower water solubility than the core material.

In another example, a zipper assembly is provided that may include a base that can be coupled with a panel of an enclosure, and interlocking elements protruding from the base that may alternate between a mated state and an unmated state to alternately close and open the enclosure. One or more of the base or the interlocking elements may be formed from include a resin having one or more of a salt or cellulose dispersed throughout the resin.

In another example, a method for forming a zipper assembly may include extruding a core material to form a zipper assembly having a base (that can be coupled with a panel of an enclosure) and interlocking elements (protruding from the base that can alternate between a mated state and an unmated state to alternately close and open the enclosure) and forming an outer layer that at least partially covers the core material of the zipper assembly. The core material may have a higher water solubility than an outer material from which the outer layer is formed.

Extruding the core material and forming the outer layer may include co-extruding the core material and the outer material to form the zipper assembly. Forming the outer layer may include coating at least part of the core material with the outer material following extrusion of the base and the interlocking elements. The core material may include one or more of a resin that includes polyvinyl alcohol, a cellulose material, talc, or calcium carbonate filler. The outer material may include a biodegradable material. The outer material may include one or more of a polyolefin, a wax, an oil, an acrylic material, low density polyethylene, a salt, or cellulose material. The outer layer may be formed to partially cover the core material.

Forming the outer layer may include extruding elongated strips of the outer material that are spaced apart from each other along directions that are transverse to elongation directions of the strips of the outer material, with the core material exposed in locations between the strips of the outer material. The outer layer may be formed by co-extruding the outer layer with the core material to only cover portions of the interlocking elements that mate with each other while leaving the core material in a remainder of the interlocking elements exposed.

The outer layer may be formed by placing the zipper assembly into a bath having the outer material following extrusion of the zipper assembly. The bath may be saturated with the outer material. The bath may include an aqueous based acrylic resin or a vinyl acrylic emulsion. The method also may include one or more of air wiping excess portions of the outer material following placement of the zipper assembly into the cooling bath. The method may include drying or curing the outer material on the zipper assembly using one or more of infrared light, heat, or ultraviolet light.

The base may be extruded to include a facing side from which the interlocking elements protrude and an opposite panel side that is configured to be sealed to the panel of the enclosure. The outer layer may be formed to cover the interlocking elements and the facing side of the base but with the core material on the panel side of the base remaining exposed. The base may be extruded to include a facing side from which the interlocking elements protrude and an opposite panel side that can be sealed to the panel of the enclosure. The outer layer may be a first outer layer, and the outer material may be a first outer material. The method may also include forming a second outer layer formed from a second outer material having lower water solubility than the core material, the first outer layer covering the interlocking elements and the facing side of the base, the second outer layer covering the panel side of the base. The second outer material may have greater adhesion to the panel of the enclosure than the first outer material.

The outer layer may be formed to completely cover and enclose the core material. The interlocking elements may be extruded to protrude from a facing side of the base with an opposite panel side of the base configured to be sealed to the panel of the enclosure. The method also may include extruding one or more sealant ribs onto the panel side of the base. The one or more sealant ribs may be formed from the outer material or another material having lower water solubility than the core material.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

Certain embodiments of the invention are described in the following numbered clauses:
Clause 1. A zipper assembly comprising:
   an elongated base configured to be coupled with a panel of an enclosure; and
   interlocking elements protruding from the base and configured to alternate between a mated state while coupled with other interlocking elements of another base and an unmated state while separated from the other interlocking elements of the other base to alternately close and open the enclosure,
   wherein one or more of the base or the interlocking elements include a core and at least a partial outer layer, the core formed from a core material having a higher water solubility than an outer material from which the outer layer is formed.
Clause 2. The zipper assembly of clause 1, wherein the base is elongated in a lateral direction and a transverse panel direction, the base extending from a first end to an opposite second end in the panel direction, the first end and the second end disposed at, beneath, or outside of the other interlocking elements of the other base while the interlocking elements of the base are mated with the other interlocking elements of the other base.
Clause 3. The zipper assembly of clause 1, wherein the core material is a resin that includes one or more of polyvinyl alcohol, hydroxyethyl cellulose, or another cellulose material.
Clause 4. The zipper assembly of clause 1, wherein the core material includes talc or calcium carbonate filler.
Clause 5. The zipper assembly of clause 1, wherein the outer material is formed from one or more of a polyolefin, a wax, an oil, an acrylic material, low density polyethylene, or another biodegradable material.
Clause 6. The zipper assembly of clause 1, wherein the outer material includes a salt, hydroxyethyl cellulose, or another cellulose.
Clause 7. The zipper assembly of clause 1, wherein the outer layer partially covers the core, and the outer layer is formed as elongated strips of the outer material that are spaced apart from each other along directions that are transverse to elongation directions of the strips of the outer material, with the core exposed in locations between the strips of the outer material.
Clause 8. The zipper assembly of clause 1, wherein the outer layer only covers portions of the interlocking elements that mate with each other while leaving the core material in a remainder of the interlocking elements exposed.
Clause 9. The zipper assembly of clause 1, wherein the base includes a facing side from which the interlocking elements protrude and an opposite panel side that is configured to be sealed to the panel of the enclosure, wherein the outer layer covers the interlocking elements and the facing side of the base but leaves the core on the panel side of the base exposed.
Clause 10. The zipper assembly of clause 1, wherein the base includes a facing side from which the interlocking elements protrude and an opposite panel side that is configured to be sealed to the panel of the enclosure, the outer layer is a first outer layer, and the outer material is a first outer material, and further comprising a second outer layer formed from a second outer material having lower water solubility than the core material, the first outer layer covering the interlocking elements and the facing side of the base, the second outer layer covering the panel side of the base.
Clause 11. The zipper assembly of clause 10, wherein the second outer material has greater adhesion to the panel of the enclosure than the first outer material.
Clause 12. The zipper assembly of clause 1, wherein the outer layer completely covers and encloses the core.
Clause 13. The zipper assembly of clause 1, wherein the interlocking elements protrude from a facing side of the base with an opposite panel side of the base configured to be sealed to the panel of the enclosure, the panel side of the base including one or more sealant ribs protruding from the panel side, the one or more sealant ribs formed from the outer material or another material having lower water solubility than the core material.
Clause 14. A zipper assembly comprising:
   a base configured to be coupled with a panel of an enclosure; and
   interlocking elements protruding from the base and configured to alternate between a mated state and an unmated state to alternately close and open the enclosure,
   wherein one or more of the base or the interlocking elements are formed from include a resin having one or more of a salt or cellulose dispersed throughout the resin.
Clause 15. A method comprising:
   extruding a core material to form a zipper assembly having a base configured to be coupled with a panel of an enclosure and interlocking elements protruding from the base and configured to alternate between a mated state and an unmated state to alternately close and open the enclosure; and
   forming an outer layer that at least partially covers the core material of the zipper assembly, the core material having a higher water solubility than an outer material from which the outer layer is formed.
Clause 16. The method of clause 15, wherein extruding the core material and forming the outer layer includes co-extruding the core material and the outer material to form the zipper assembly.
Clause 17. The method of clause 15, wherein forming the outer layer includes coating at least part of the core material with the outer material following extrusion of the base and the interlocking elements.
Clause 18. The method of clause 15, wherein the core material includes one or more of a resin that includes polyvinyl alcohol, a cellulose material, talc, or calcium carbonate filler.
Clause 19. The method of clause 15, wherein the outer material includes a biodegradable material.
Clause 20. The method of clause 15, wherein the outer material includes one or more of a polyolefin, a wax, an oil, an acrylic material, low density polyethylene, a salt, or cellulose material.

This written description uses examples to disclose the embodiments to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A zipper assembly comprising:
an elongated base configured to be coupled with a panel of an enclosure; and
interlocking elements protruding from the base and configured to alternate between a mated state while coupled with other interlocking elements of another base and an unmated state while separated from the other interlocking elements of the other base to alternately close and open the enclosure,
wherein one or more of the base or the interlocking elements include a core and at least a partial outer layer, the core formed from a core material having a higher water solubility than an outer material from which the outer layer is formed.

2. The zipper assembly of claim 1, wherein the base is elongated in a lateral direction and a transverse panel direction, the base extending from a first end to an opposite second end in the panel direction, the first end and the second end disposed at, beneath, or outside of the other interlocking elements of the other base while the interlocking elements of the base are mated with the other interlocking elements of the other base.

3. The zipper assembly of claim 1, wherein the core material is a resin that includes one or more of polyvinyl alcohol, hydroxyethyl cellulose, or another cellulose material or wherein the core material includes talc or calcium carbonate filler.

4. The zipper assembly of claim 1, wherein the outer material is formed from one or more of a polyolefin, a wax, an oil, an acrylic material, low density polyethylene, or another biodegradable material or wherein the outer material includes a salt, hydroxyethyl cellulose, or another cellulose.

5. The zipper assembly of claim 1, wherein the outer layer partially covers the core, and the outer layer is formed as elongated strips of the outer material that are spaced apart from each other along directions that are transverse to elongation directions of the strips of the outer material, with the core exposed in locations between the strips of the outer material.

6. The zipper assembly of claim 1, wherein the outer layer only covers portions of the interlocking elements that mate with each other while leaving the core material in a remainder of the interlocking elements exposed.

7. The zipper assembly of claim 1, wherein the base includes a facing side from which the interlocking elements protrude and an opposite panel side that is configured to be sealed to the panel of the enclosure, wherein the outer layer covers the interlocking elements and the facing side of the base but leaves the core on the panel side of the base exposed.

8. The zipper assembly of claim 1, wherein the base includes a facing side from which the interlocking elements protrude and an opposite panel side that is configured to be sealed to the panel of the enclosure, the outer layer is a first outer layer, and the outer material is a first outer material, and further comprising a second outer layer formed from a second outer material having lower water solubility than the core material, the first outer layer covering the interlocking elements and the facing side of the base, the second outer layer covering the panel side of the base and optionally wherein the second outer material has greater adhesion to the panel of the enclosure than the first outer material.

9. The zipper assembly of claim 1, wherein the outer layer completely covers and encloses the core.

10. The zipper assembly of claim 1, wherein the interlocking elements protrude from a facing side of the base with an opposite panel side of the base configured to be sealed to the panel of the enclosure, the panel side of the base including one or more sealant ribs protruding from the panel side, the one or more sealant ribs formed from the outer material or another material having lower water solubility than the core material.

11. A zipper assembly comprising:
a base configured to be coupled with a panel of an enclosure; and
interlocking elements protruding from the base and configured to alternate between a mated state and an unmated state to alternately close and open the enclosure,
wherein one or more of the base or the interlocking elements are formed from include a resin having one or more of a salt or cellulose dispersed throughout the resin.

12. A method comprising:
extruding a core material to form a zipper assembly having a base configured to be coupled with a panel of an enclosure and interlocking elements protruding from the base and configured to alternate between a mated state and an unmated state to alternately close and open the enclosure; and
forming an outer layer that at least partially covers the core material of the zipper assembly, the core material having a higher water solubility than an outer material from which the outer layer is formed.

13. The method of claim 12, wherein extruding the core material and forming the outer layer includes co-extruding the core material and the outer material to form the zipper assembly or wherein forming the outer layer includes coating at least part of the core material with the outer material following extrusion of the base and the interlocking elements or wherein the core material includes one or more of a resin that includes polyvinyl alcohol, a cellulose material, talc, or calcium carbonate filler.

14. The method of claim 12, wherein the outer material includes a biodegradable material.

15. The method of claim 15, wherein the outer material includes one or more of a polyolefin, a wax, an oil, an acrylic material, low density polyethylene, a salt, or cellulose material.
